# FASCICULE DE BREVET EUROPEEN

(11) **EP 2 246 603 B1**
(45) Date de publication et mention de la délivrance du brevet: **03.08.2011**
(21) Numéro de dépôt: 10305314.6
(22) Date de dépôt: 26.03.2010
(51) Int. Cl.: F16L 13/02, F16L 59/20

(54) **Dispositif d'étanchéite et d'isolation pour conduits et systèmes de raccordement de canalisation**
Vorrichtung zum Abdichten und zur Isolierung von Leitungen und Verbindungssystem für Rohre
Sealing and insulation device for a conduit and a conduit connection system

(30) Priorité: 29.04.2009 FR 0952799
(43) Date de publication de la demande: 03.11.2010
(73) Titulaire: Financiere de Beaumont- FDB, 26100 Romans (FR)
(72) Inventeur: Courbis, Hervé, 26600 Beaumont Monteux (FR)
(74) Mandataire: Dupuis, François

(56) Documents cités:
- EP-A1- 0 908 662
- DE-A1- 2 758 516
- US-A- 5 070 597

## Description

L'invention se rattache au secteur technique des structures assurant des fonctionnalités d'isolation et d'étanchéité sur des canalisations, conduits, raccords et tous moyens permettant la circulation de fluides. Ces fluides peuvent être des fluides liquides ou gazeux de toute nature selon les applications. A titre d'exemple, ces fluides peuvent être aussi bien de l'eau, du pétrole, du gaz ou autre.

Un tel dispositif est connu par example du document DE 2758516 A1.

Le problème posé à l'origine de la présente invention est celui des canalisations immergées dans les fonds marins constituant des pipelines pour le transfert et l'acheminement du pétrole et/ou du gaz dans un environnement physique difficile, voire très difficile lié aux températures in situ, aux mouvements de terrain ou de l'eau générés par les courants marins. A l'inverse, certains pipelines sont en environnement libre dans le désert par exemple et les contraintes de température et de différentiel de température sont très forts également.

Dans le premier cas des fonds marins, un des problèmes majeurs est celui du différentiel de température qui est très basse en fonction de la profondeur de pose des pipelines. Cette température très faible de l'ordre de 3 à 5° C est à comparer avec la température existante à l'intérieur du pipeline qui elle est élevée pour permettre le passage du fluide et sa circulation dans les meilleures conditions. Par exemple, pour le pétrole, la température intérieure dans le pipeline est de l'ordre de 100 à 110° C.

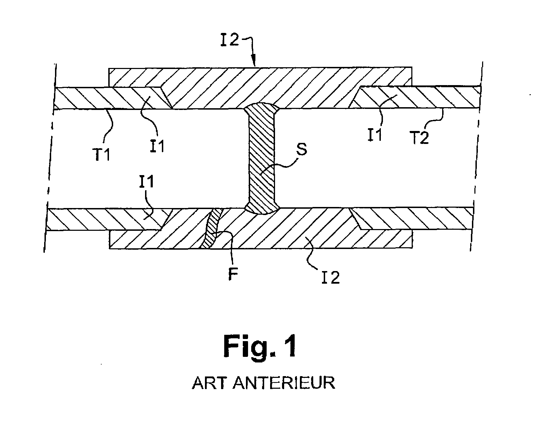

Il est absolument nécessaire qu'il n'y ait pas d'interconnexion possible entre ces températures si l'on veut conserver les propriétés de fluidité requises. Pour se faire, dans l'exemple donné pour l'application des pipelines pour le pétrole, on dispose aux endroits de jonction des parties de tubes ou canalisations constitutives de modules et autour des joints de soudure, une structure de raccordement à base de polyuréthane. On a ainsi représenté figure 1 au titre de l'art antérieur pour la compréhension de l'invention, les tubes (T1) et (T2), le cordon de soudure (S), un premier isolant (I1) sous forme de fourreau en polyuréthane entourant la partie de conduit (T1) ou (T2), laissant libre la zone autour du joint de soudure. Un manchon (I2) est rapporté en polyuréthane qui recouvre la zone de joint de soudure et aussi les parties en regard de l'isolant (I1). On a ainsi formation d'un manchon de plus ou moins grande longueur assurant par chevauchement la zone de soudure à protéger, en prenant appui sur l'isolant (I1).

En pratique, en égard des sollicitations environnementales générées par les mouvements de tension, des courants marins, le pipeline bouge sous la contrainte de forces multidirectionnelles, selon une amplitude même si celle-ci est contrôlée. Cela génère des détériorations et l'apparition de fissures (F) à travers l'assemblage du manchon et des fourreaux, les deux étant en polyuréthane. L'apparition de fissures même très faibles peut générer des passages d'air et donc des voies de communication entre l'environnement extérieur à température basse de l'ordre de 3 à 5° C par exemple et la température dans le milieu intérieur du pipeline. Il se produit alors un abaissement de la température à l'intérieur du pipeline, ce qui peut avoir un effet sur le fluide de circulation lui-même. Dans l'exemple du pétrole, ce dernier par l'abaissement de température peut modifier son état et devenir plus ou moins pâteux avec pour conséquence la formation de bouchons plus ou moins importants. Il y a donc formation de zones butoirs qui ralentissent, voire empêchent la circulation du pétrole avec soit une diminution notable de la production, soit à terme des risques d'explosion.

Il s'agit donc d'inconvénients très sérieux et valables pour différents types de fluides pétrole, gaz tout particulièrement.

Le Demandeur a donc cherché à remédier à ces inconvénients et éviter les risques de modification de température dans les conduits de circulation de tels fluides générés par des transferts de température autorisés pour la détérioration de la structure de protection et d'isolation des tubes et les tubes eux-mêmes.

Dans la mesure où il n'est pas possible d'agir sur les contraintes environnementales au milieu desquelles se situe le pipeline, la seule possibilité était d'améliorer encore la structure d'assemblage entourant la zone de jonction des conduits.

La solution apportée par l'invention répond parfaitement à cette problématique. Cette solution est aussi applicable dans des conditions d'installation de conduits, canalisations dans des milieux environnementaux très variables avec plus ou moins de contraintes extrêmes.

La solution selon l'invention apporte une amélioration conséquente. Elle met en oeuvre une structure très particulière avec l'utilisation d'un dispositif spécifique pour la positionner autour des conduits de canalisation.

Selon une première caractéristique de l'invention, le dispositif d'étanchéité et d'isolation pour conduits et systèmes de raccordement de canalisation pour fluides de toute nature, du type s'intégrant autour de deux tubes solidarisés entre eux par une ligne de soudure, est remarquable en ce qu'il est constitué par une structure de deux composants en matériaux différents, avec un composant de base réalisé sous la forme d'un cylindre de grande longueur en matériau silicone, et le second composant réalisé en polyuréthane étant susceptible d'entourer partiellement ledit premier composant en étant solidarisé à ce dernier par un ou des moyens de liaison, et en ce que le manchon est de plus grande longueur que le composant défini par le cylindre pour être saisi et manipulé en vue d'assurer l'entourage, et en ce que ladite structure est positionnée autour des tubes à isoler, en ayant la capacité d'ouverture et de fermeture pour permettre son insertion autour des tubes et ensuite la fermeture, grâce à la déformation des parties du cylindre non recouvertes par le manchon.

Ces caractéristiques et d'autres encore ressortiront bien de la suite de la description.

Pour fixer l'objet de l'invention illustrée d'une manière non limitative aux figures des dessins où :
- la figure 1 est une vue à caractère schématique et en coupe d'un dispositif d'étanchéité et d'isolation de conduits selon l'art antérieur exposé ci-avant.
- la figure 2 est une vue éclatée avant montage de la structure d'isolation et d'étanchéité selon l'invention.
- la figure 3 est une vue en coupe illustrant la liaison entre les composants de ladite structure selon l'invention.

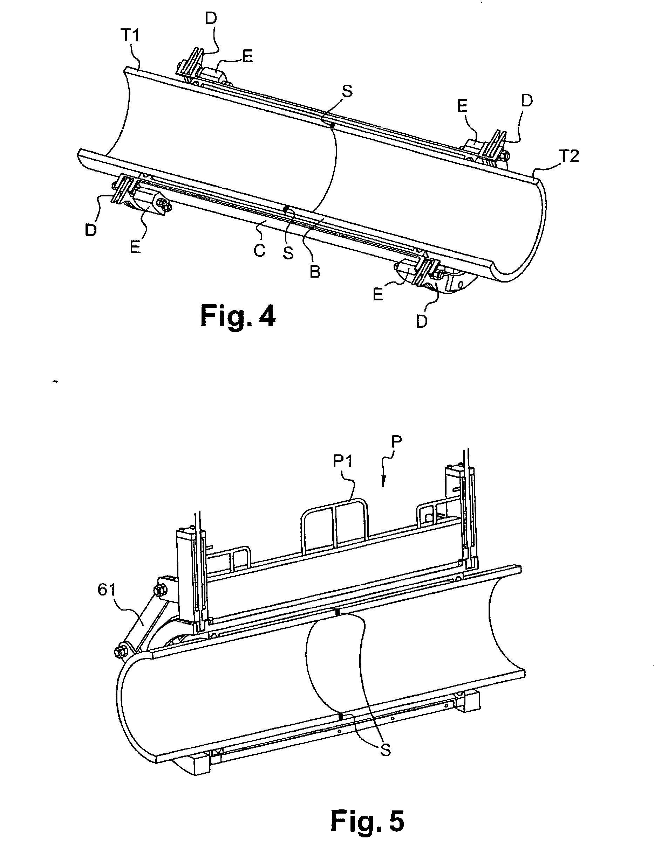

- la figure 4 illustre en vue de perspective en demi-partie le positionnement de la structure selon l'invention par rapport à un tube ou une canalisation, la ligne de jonction par soudure n'étant pas maintenue mais se trouvant au milieu entre les extrémités du premier composant.
- la figure 5 est une vue en demi-partie illustrant le positionnement du dispositif servant à mettre en place la structure autour du tube ou de la canalisation.

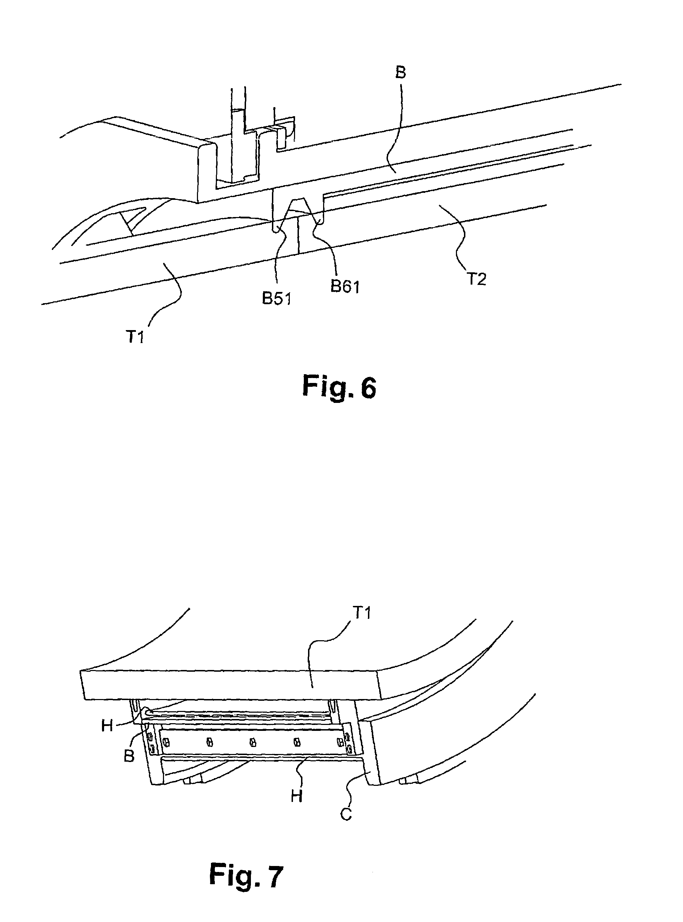

- la figure 6 est une vue de détail illustrant l'étanchéité de la structure sur le tube dans un plan transversal.
- la figure 7 est une vue de détail à section transversale illustrant la structure selon l'invention.
- la figure 8 est une vue en perspective de trois-quarts illustrant la mise en place de la structure selon l'invention par le dispositif.
- la figure 9 est une vue partielle en perspective illustrant l'étanchéité formée par la structure dans son plan longitudinal.
- la figure 10 est une vue en perspective de trois-quarts illustrant la structure et son dispositif de mise en place.
- la figure 11 est une vue de face selon la figure 10.
- la figure 12 est une vue de côté selon la figure 10.
- la figure 13 est une vue à grande échelle illustrant la liaison des composants de la structure selon l'invention.

Afin de rendre plus concret l'objet de l'invention, on le décrit maintenant d'une manière non limitative illustrée aux figures des dessins.

La structure selon l'invention est référencée dans son ensemble par (A). Elle a pour fonction d'assurer l'isolation et l'étanchéité par rapport à l'adjonction de deux tubes (T1-T2) ou canalisations qui sont solidarisés entre eux par une jonction de ligne de soudure (S) du type connu selon l'art antérieur et représentée figure 1 à titre d'exemple.

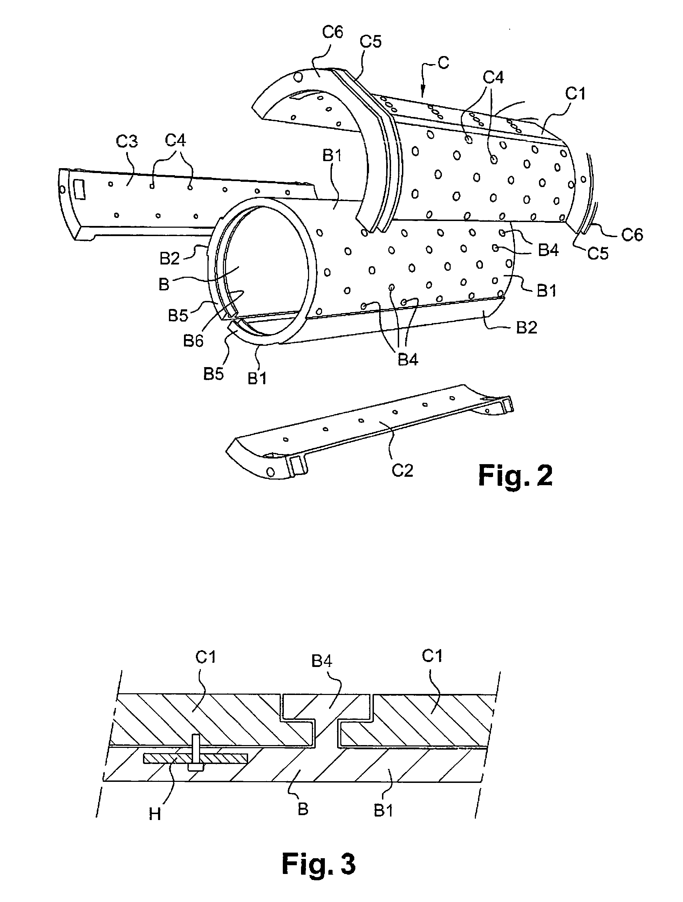

La figure 2 représente la structure d'étanchéité selon l'invention, et elle est constituée par l'assemblage de deux composants (B) et (C) qui sont réalisés en des matériaux différents. Le composant de base (B) est réalisé sous la forme d'un cylindre ou fourreau de grande longueur en matériau silicone ou similaire. Ce cylindre n'est pas uniforme sur sa longueur et présente sur une partie de sa surface des zones (B1) agencées pour autoriser le positionnement et centrage et fixation du second composant (C), et d'autres zones (B2) adjacentes qui sont lisses et établies sur la longueur du cylindre. Sur sa partie supérieure, le cylindre présente une forme méplate (B3) dans sa longueur, étant sensiblement dans le même rayon que les zones (B2) lisses précitées. Les zones (B1) sont conformées pour la réception du composant (C) ou parties de ce composant. A cet effet, la liaison peut s'effectuer par collage ou par tout autre moyen. Plus particulièrement, ainsi qu'illustré aux dessins, chacune des zones (B1) est agencée avec une pluralité de saillies (B4) directement formées avec la configuration du cylindre. Les parties en saillie apparentes telles qu'illustrées figure 2 restent dans un plan au plus égal à celui de la génératrice formée sur les parties de la zone lisse (B2). Ces surfaces avec zones en saillie sont susceptibles de coopérer et de permettre le centrage, le positionnement et la fixation du second composant (C) établi sous forme d'un manchon susceptible d'entourer le cylindre dans les zones correspondantes. En se référant à la figure 2, ce manchon comprend en pratique trois parties (C1, C2, C3), une supérieure (C1) correspondant sensiblement au diamètre du cylindre et deux flans latéraux (C2, C3) qui sont positionnés au-delà des zones (B2) lisses formées sur le cylindre précité. Il y a lieu d'observer que le manchon présente également dans les zones à recouvrement des parties présentant des formes en saillie (B4) des ouvertures (C4) qui sont susceptibles de permettre l'intégration des zones en saillie et d'assurer ainsi une liaison ferme. En pratique, le manchon est surmoulé autour du cylindre, et on a donc ainsi une liaison ferme et durable de l'ensemble des deux composants de la structure.

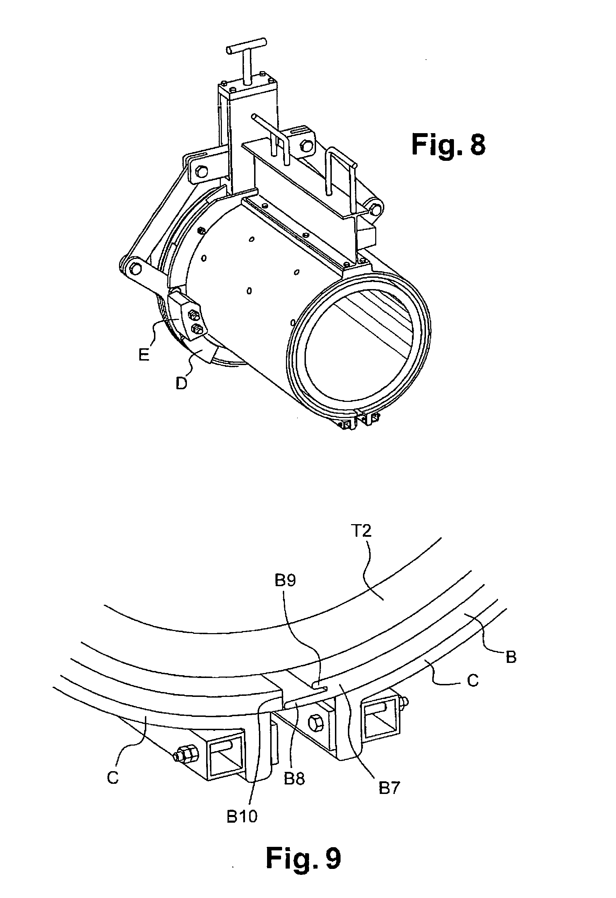

A chacun de ses extrémités, le cylindre (B) est aménagé avec deux collerettes annulaires (B5, B6) formant lèvres intérieurement (B51, B61), espacées l'une de l'autre de quelques millimètres, ces lèvres étant destinées à venir en appui sur le conduit ou tube (T1, T2) à recouvrir et à assurer ainsi une certaine étanchéité. Ces lèvres ont une capacité de déformation lors de l'appui sur le tube (T1, T2) ou la canalisation. Par ailleurs, dans sa longueur, le cylindre formant fourreau est aménagé également à partir d'un plan de bordure (B7) avec d'autres lèvres (B8, B9) (figure 9) qui sont susceptibles de venir se rapprocher du plan de bordure longitudinal (B10) opposé du cylindre pour assurer l'étanchéité dans le plan longitudinal. On voit à la figure 3 la liaison des formes en saillie permettant la liaison du cylindre sur le manchon. Tout cela est obtenu lors de la fabrication de l'ensemble. Le manchon (C) est réalisé en un autre matériau du type polyuréthane et notamment celui commercialisé par le Demandeur sous la marque COURBHANE. On note ainsi que le manchon (C) ne recouvre pas en totalité la surface du cylindre (B), laissant libre deux zones latérales correspondant aux parties lisses (B2) exemptes de formes en saillie. Cette disposition est extrêmement importante, car la mise en place d'une telle structure va permettre au cylindre d'avoir une certaine liberté d'extensibilité et de déformabilité en égard des sollicitations qui seront générées par l'environnement extérieur, et aussi pour permettre aussi la mise en place de la structure d'isolation autour des tubes à protéger. La capacité élastique de déformation des parties lisses (B2) crée en quelque sorte des zones d'articulation possibles pouvant ouvrir ou fermer la structure ainsi décrite selon la situation et mise en place autour des tubes.

En se référant aux dessins, on voit que le manchon (C) a une longueur sensiblement supérieure à celle du cylindre (B), le manchon présentant sur ses extrémités des flasques (C5, C6) transversaux définissant un espace entre eux pour permettre le positionnement des moyens de prise (D) du dispositif de mise en place de la structure sur les tubes. Le flasque intérieur (C5) sert également de contre-appui à des moyens (E) qui agissent en pression sur les lèvres (B51, B61) du cylindre (C) en étant associés au dispositif.

Il y a lieu aussi de préciser en se référant par exemple à la figure 3 que le cylindre (B) peut être aménagé avec des moyens de renforcement (H) du type inserts. Ces derniers sont noyés dans le cylindre en silicone et des doigts d'ancrage (H1) associés aux inserts peuvent déborder et pénétrer dans l'épaisseur du manchon en polyuréthane pour rigidifier l'ensemble.

Il convient dès lors de décrire le dispositif qui permet la mise en place et l'installation de la structure d'isolation et d'étanchéité selon l'invention.

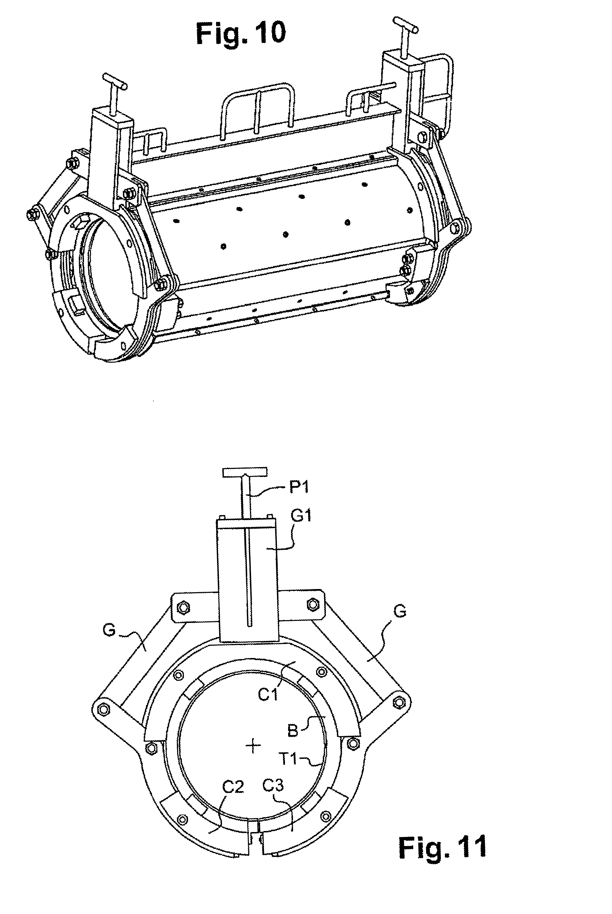

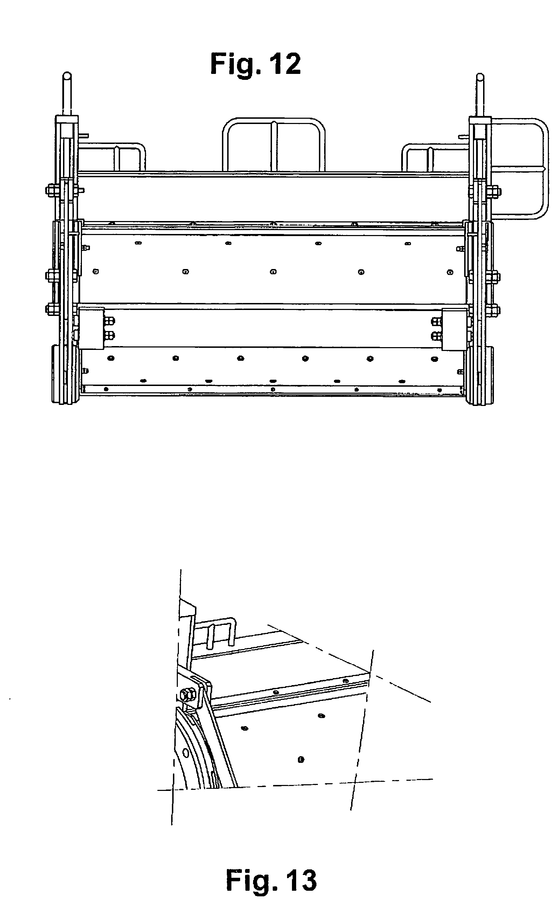

Ce dispositif est particulièrement illustré aux figures 10 à 13. Il comprend un portique (P) établi dans la longueur de la structure, avec un moyen de prise (P1) pour être soulevé et à chacune de ses extrémités un mécanisme à bras articulés (G) formant pince avec des moyens de prise (D) s'ajustant entre les flasques (C5, C6) du manchon. Le mécanisme à bras (G) inclut un système de commande (G1) qui peut être couplé ou non en fonctionnement pour enserrer en une seule opération la structure d'isolation et d'étanchéité selon l'invention.

Afin de permettre l'ouverture de la structure en vue de son passage autour des tubes (T1, T2), les moyens (E) sont d'une part solidarisés de la partie lisse (B2) du cylindre et aussi des bras articulés du mécanisme (G), ce qui permet par la flexibilité donnée « d'ouvrir » la structure et de lui permettre de passer autour des tubes.

Le dispositif est particulièrement utilisé pour la mise en place des structures en milieu marin, en étant commandé par robot.

Sans sortir du cadre de l'invention, la structure d'isolation et d'étanchéité peut être utilisée pour des applications moins lourdes avec utilisation ou non du dispositif.

Lorsque la structure d'isolation et d'étanchéité a été mise en place et fermée autour des tubes (T1) et (T2), il y a une parfaite étanchéité du cylindre, les lèvres (B8, B9) étant en contact étroit et en pression sur la bordure opposée du cylindre. Le cas échéant, des moyens de cerclage complémentaires peuvent être disposés.

Selon l'invention, la réalisation de la structure avec deux matériaux différents en silicone et en polyuréthane offre une meilleure qualité de tenue et sans risque de fissure. La configuration de la structure garantit cette tenue.

Les avantages ressortent bien de l'invention. On souligne la nouvelle conception de la structure d'isolation et d'étanchéité bi-composants silicone /polyuréthane qui offre des performances très améliorées et qui permettent de répondre au problème posé d'origine de l'invention.

## Revendications

1. Dispositif d'étanchéité et d'isolation pour conduits et systèmes de raccordement de canalisation pour fluides de toute nature, du type s'intégrant autour de deux tubes (T1-T2) solidarisés entre eux par une ligne de soudure, **caractérisé en ce qu'**il est constitué par une structure de deux composants (B) et (C) en matériaux différents, avec un composant de base (B) réalisé sous la forme d'un cylindre de grande longueur en matériau silicone, et le second composant (C) réalisé en polyuréthane étant susceptible d'entourer partiellement ledit premier composant en étant solidarisé à ce dernier par un ou des moyens de liaison, et **en ce que** le manchon (C) est de plus grande longueur que le composant (B) défini par le cylindre pour être saisi et manipulé en vue d'assurer l'entourage, et **en ce que** ladite structure est positionnée autour des tubes (T1-T2) à isoler, en ayant la capacité d'ouverture et de fermeture pour permettre son insertion autour des tubes et ensuite la fermeture, grâce à la déformation des parties du cylindre non recouvertes par le manchon.

2. Dispositif selon la revendication 1, **caractérisé en ce que** le cylindre n'est pas uniforme sur sa longueur et présente sur une partie de sa surface des zones (B1) agencées pour autoriser le positionnement et centrage et fixation du second composant (C), et d'autres zones (B2) adjacentes qui sont lisses et établies sur la longueur du cylindre.

3. Dispositif selon la revendication 2, **caractérisé en ce que** sur sa partie supérieure, le cylindre présente une forme méplate (B3) dans sa longueur, étant sensiblement dans le même rayon que les zones (B2) lisses précitées, et **en ce que** les zones (B1) sont conformées pour la réception du composant (C) ou parties de ce composant.

4. Dispositif selon la revendication 3, **caractérisé en ce que** la liaison entre le cylindre et le manchon s'effectue par collage.

5. Dispositif selon la revendication 3, **caractérisé en ce que** chacune des zones (B1) est agencée avec une pluralité de saillies (B4) directement formées avec la configuration du cylindre, et **en ce que** les parties en saillie apparentes restent dans un plan au plus égal à celui de la génératrice formée sur les parties de la zone lisse (B2), et **en ce que** ces surfaces avec zones en saillie sont susceptibles de coopérer et de permettre le centrage, le positionnement et la fixation du second composant (C).

6. Dispositif selon la revendication 5, **caractérisé en ce que** le manchon comprend trois parties (C1, C2, C3), une supérieure (C1) correspondant sensiblement au diamètre du cylindre et deux flans latéraux (C2, C3) qui sont positionnés au-delà des zones (B2) lisses formées sur le cylindre précité, et **en ce que** le manchon présente dans les zones à recouvrement des parties présentant des formes en saillie (B4) des ouvertures (C4) qui sont susceptibles de permettre l'intégration des zones en saillie et d'assurer ainsi une liaison ferme.

7. Dispositif selon la revendication 6, **caractérisé en ce que** le manchon est surmoulé autour du cylindre, et on a donc ainsi une liaison ferme et durable de l'ensemble des deux composants de la structure.

8. Dispositif selon la revendication 2, **caractérisé en ce qu'**à chacune de ses extrémités, le cylindre (B) est aménagé avec deux collerettes annulaires (B5, B6) formant lèvres intérieurement (B51, B61), espacées l'une de l'autre de quelques millimètres, ces lèvres étant destinées à venir en appui sur le conduit ou tube (T1, T2) à recouvrir et à assurer ainsi une certaine étanchéité, et **en ce que** ces lèvres ont une capacité de déformation lors de l'appui sur le tube (T1, T2) ou la canalisation.

9. Dispositif selon la revendication 2, **caractérisé en ce que** dans sa longueur, le cylindre formant fourreau est aménagé également à partir d'un plan de bordure (B7) avec d'autres lèvres (B8, B9) qui sont susceptibles de venir se rapprocher du plan de bordure longitudinal (B10) opposé du cylindre pour assurer l'étanchéité dans le plan longitudinal.

10. Dispositif selon la revendication 1, **caractérisé en ce que** le manchon (C) est réalisé en un matériau en polyuréthane et notamment celui commercialisé par le Demandeur sous la marque COURBHANE.

11. Dispositif selon la revendication 2, **caractérisé en ce que** le manchon (C) ne recouvre pas en totalité la surface du cylindre (B), laissant libre deux zones latérales correspondant aux parties lisses (B2) exemptes de formes en saillie, ce qui permet au cylindre d'avoir une certaine liberté d'extensibilité et de déformabilité, et **en ce que** la capacité élastique de déformation des parties lisses (B2) crée des zones d'articulation possibles pouvant ouvrir ou fermer la structure ainsi décrite selon la situation et mise en place autour des tubes.

12. Dispositif selon la revendication 8, **caractérisé en ce que** le manchon (C) a une longueur sensiblement supérieure à celle du cylindre (B), le manchon présentant sur ses extrémités des flasques (C5, C6) transversaux définissant un espace entre eux pour permettre le positionnement des moyens de prise (D) du dispositif de mise en place de la structure sur les tubes, et **en ce que** le flasque intérieur (C5) sert également de contre-appui à des moyens (E) qui agissent en pression sur les lèvres (B51, B61) du cylindre (C) en étant associés au dispositif.

13. Dispositif selon la revendication 2, **caractérisé en ce que** le cylindre (B) est aménagé avec des moyens de renforcement (H) du type inserts, ces derniers étant noyés dans le cylindre en silicone et des doigts d'ancrage (H1) associés aux inserts peuvent déborder et pénétrer dans l'épaisseur du manchon en polyuréthane pour rigidifier l'ensemble.

14. Dispositif selon la revendication 12 permettant la mise en place de la structure autour du tubes (T1-T2), **caractérisé en ce qu'**il comprend un portique (P) établi dans la longueur de la structure, avec un moyen de prise (P1) pour être soulevé et à chacune de ses extrémités un mécanisme à bras articulés (G) formant pince avec des moyens de prise (D) s'ajustant entre les flasques (C5, C6) du manchon, et **en ce que** le mécanisme à bras (G) inclut un système de commande (G1) qui peut être couplé ou non en fonctionnement pour enserrer en une seule opération la structure d'isolation et d'étanchéité selon l'invention.

15. Dispositif selon la revendication 14, **caractérisé en ce que** les moyens (E) sont d'une part solidarisés de la partie lisse (B2) du cylindre et aussi des bras articulés du mécanisme (G), ce qui permet par la flexibilité donnée « d'ouvrir » la structure et de lui permettre de passer autour des tubes.

## Claims

1. Sealing and insulating device, for pipes and connection systems for pipework carrying fluids of all types, of the kind that is fitted around two tubes (T1-T2) secured to each other by a weld line, **characterised in that** it is constituted by a structure consisting of two components (B) and (C) made of different materials, with a base component (B) implemented in the form of a cylinder of great length made of silicone material, and the second component (C) made of polyurethane being capable of partially surrounding said first component while being secured thereto by one or more connection means, and **in that** the sleeve (C) is of greater length than the component (B) defined by the cylinder so that it can be grasped and handled in order to be put round it, and **in that** said structure is positioned around the tubes (T1-T2) for insulation, having opening and closing capability so that it can be inserted around the tubes and finally closed, due to the deformation of the parts of the cylinder not covered by the sleeve.

2. Device as claimed in claim 1, **characterised in that** the cylinder is not uniform over its length and has on one part of its surface zones (B1) provided so that the second component (C) can be positioned and centred and fixed, and other adjacent zones (B2) that are smooth and established over the length of the cylinder.

3. Device as claimed in claim 2, **characterised in that** on its upper part, the cylinder has a flat shape (B3) along its length that is substantially in the same radius as the aforementioned smooth zones (B2), and **in that** the zones (B1) are shaped so as to accommodate the component (C) or parts of this component.

4. Device as claimed in claim 3, **characterised in that** the connection between the cylinder and the sleeve is implemented by bonding.

5. Device as claimed in claim 3, **characterised in that** each of the zones (B1) is provided with a plurality of projections (B4) formed directly with the configuration of the cylinder, and **in that** the visible projecting parts remain in a plane that is at most equal to that of the generator formed on the parts of the smooth zone (B2), and **in that** these surfaces with projecting zones are capable of engaging and allowing the second component (C) to be centred, positioned and fixed.

6. Device as claimed in claim 5, **characterised in that** the sleeve includes three parts (C1, C2, C3), an upper part (C1) corresponding substantially to the diameter of the cylinder and two side panels (C2, C3) that are positioned beyond the smooth zones (B2) formed on the aforementioned cylinder, and **in that** the sleeve has in the zones for covering the parts with projecting forms (B4) openings (C4) that are capable of allowing the projecting zones to be integrated and providing a firm connection thereby.

7. Device as claimed in claim 6, **characterised in that** the sleeve is overmoulded on the cylinder, thus giving a firm and durable connection of the unit comprising the two components of the structure.

8. Device as claimed in claim 2, **characterised in that** at each of the ends thereof, the cylinder (B) is provided with two annular collars (B5, B6) forming lips internally (B51, B61), spaced a few millimetres apart from each other, these lips being intended to press against the pipe or tube (T1, T2) to be covered and thereby ensure a certain tightness, and **in that** these lips have deformation capacity when pressing against the tube (T1, T2) or the pipe.

9. Device as claimed in claim 2, **characterised in that** along its length, the sheath-forming cylinder is also provided, starting from an edging plane (B7), with other lips (B8, B9) that are capable of moving closer to the opposite longitudinal edging plane (B10) of the cylinder to provide the seal in the longitudinal plane.

10. Device as claimed in claim 1, **characterised in that** the sleeve (C) is made of a polyurethane material and in particular the material marketed by the Applicant under the COURBHANE brand.

11. Device as claimed in claim 2, **characterised in that** the sleeve (C) does not cover the entire surface of the cylinder (B), leaving free the two side zones corresponding to the smooth parts (B2) without projecting forms, which gives the cylinder a certain freedom of extensibility and deformability, and **in that** the elastic deformation capacity of the smooth parts (B2) creates possible articulation zones that can open or close the structure as described depending on the situation and placement around the tubes.

12. Device as claimed in claim 8, **characterised in that** the sleeve (C) is of substantially greater length than the cylinder (B), the sleeve having on the ends thereof transverse flanges (C5, C6) defining a space between them in order to accommodate the gripping means (D) of the device for placing the structure on the tubes, and **in that** the internal flange (C5) also acts as a counter-support for means (E) that press on the lips (B51, B61) of the cylinder (C) while being associated with the device.

13. Device as claimed in claim 2, **characterised in that** the cylinder (B) is provided with reinforcement means (H) of the insert type, the latter being embedded in the silicone cylinder and anchoring fingers (H1) associated with the inserts may protrude and penetrate into the thickness of the polyurethane sleeve in order to rigidify the whole.

14. Device as claimed in claim 12 allowing the structure to be placed around the tubes (T1-T2), **characterised in that** it includes a gantry (P) established along the length of the structure, with a gripping means (P1) so that it can be lifted and at each of the ends thereof an articulated-arm mechanism (G) forming a clamp with gripping means (D) fitted between the flanges (C5, C6) of the sleeve, and **in that** the arm mechanism (G) includes a control system (G1) that may or may not be coupled in operation so that the inventive insulating and sealing structure can be clasped in a single operation.

15. Device as claimed in claim 14, **characterised in that** the means (E) are on the one hand secured to the smooth part (B2) of the cylinder and also to the articulated arms of the mechanism (G), which means that, through the flexibility given, the structure can "open" and be fitted around the tubes.

## Patentansprüche

1. Vorrichtung zur Abdichtung und Isolierung von Leitungen und Leitungsanschlusssystemen für Fluide jeder Art vom Typ derjenigen, die um zwei durch eine Schweißnaht fest miteinander verbundene Rohre (T1-T2) herum eingefügt werden, **dadurch gekennzeichnet, dass** sie aus einer Struktur mit zwei Komponenten (B) und (C) aus verschiedenen Materialien besteht, wobei eine Basiskomponente (B) in Form eines langen Zylinders aus Silikonmaterial ausgeführt ist und die zweite Komponente (C) aus Polyurethan besteht und geeignet ist, die besagte erste Komponente teilweise zu umgeben und dabei mit letzterer durch ein oder mehrere Verbindungsmittel fest verbunden wird, und dass die Muffe (C) länger ist als die durch den Zylinder definierte Komponente (B), um zur Bewerkstelligung der Umgebung ergriffen und gehandhabt zu werden, und dass die besagte Struktur um die zu isolierenden Röhren (T1-T2) herum positioniert wird und geöffnet und geschlossen werden kann, um das Einsetzen um die Röhren herum und dann durch die Verformung der nicht von der Muffe abgedeckten Teile des Zylinders das Verschließen zu ermöglichen.

2. Vorrichtung nach Anspruch 1, **dadurch gekennzeichnet, dass** der Zylinder auf seiner Länge nicht einförmig ist und auf einem Teil seiner Oberfläche Zonen (B1) aufweist, die so ausgebildet sind, um die Positionierung, Zentrierung und Fixierung der zweiten Komponente (C) zu ermöglichen, sowie andere angrenzende Zonen (B2), die glatt und auf der ganzen Länge des Zylinders vorhanden sind.

3. Vorrichtung nach Anspruch 2, **dadurch gekennzeichnet, dass** der Zylinder auf seinem oberen Teil eine in der Länge abgeflachte Form (B3) aufweist, die sich ziemlich genau im gleichen Radius befindet wie die vorgenannten glatten Zonen (B2), und dass die Zonen (B1) für die Aufnahme der Komponente (C) bzw. von Teilen dieser Komponente ausgebildet sind.

4. Vorrichtung nach Anspruch 3, **dadurch gekennzeichnet, dass** die Verbindung zwischen dem Zylinder und der Muffe durch Verkleben erfolgt.

5. Vorrichtung nach Anspruch 3, **dadurch gekennzeichnet, dass** jede der Zonen (B1) mit einer Vielzahl von Vorsprüngen (B4) versehen ist, die unmittelbar bei der Formgebung des Zylinders ausgebildet werden, und dass die sichtbaren vorspringenden Teile auf einer Ebene bleiben, die höchstens derjenigen der Mantellinie auf den Teilen der glatten Zone (B2) entspricht, und dass die Flächen mit vorspringenden Zonen geeignet sind, mit der zweiten Komponente (C) zusammenzuwirken und deren Zentrierung, Positionierung und Fixierung zu ermöglichen.

6. Vorrichtung nach Anspruch 5, **dadurch gekennzeichnet, dass** die Muffe drei Teile (C1, C2, C3) umfasst, einen oberen Teil (C1), der ziemlich genau dem Durchmesser des Zylinders entspricht, und zwei Seitenteile (C2, C3), die jenseits der am vorgenannten Zylinder ausgebildeten glatten Zonen (B2) positioniert sind, und dass die Muffe in den Überdeckungszonen der Teile mit den vorspringenden Formen (B4) Öffnungen (C4) aufweist, die geeignet sind, den Eingriff der vorspringenden Zonen zu ermöglichen und somit eine feste Verbindung zu gewährleisten.

7. Vorrichtung nach Anspruch 6, **dadurch gekennzeichnet, dass** die Muffe um den Zylinder herum aufgegossen wird und man dadurch eine feste und dauerhafte Verbindung der beiden Komponenten der Struktur erhält.

8. Vorrichtung nach Anspruch 2, **dadurch gekennzeichnet, dass** der Zylinder (B) an jedem seiner Enden mit zwei ringförmigen Dichträndern (B5, B6) ausgebildet ist, die innen um einige Millimeter voneinander abgesetzte Lippen (B51, B61) bilden, wobei diese Lippen dazu bestimmt sind, auf der zu überdeckenden Leitung bzw. dem Rohr (T1, T2) aufzuliegen und so eine gewisse Dichtigkeit zu gewährleisten, und dass diese Lippen beim Aufliegen auf dem Rohr (T1, T2) bzw. der Leitung verformbar sind.

9. Vorrichtung nach Anspruch 2, **dadurch gekennzeichnet, dass** der die Hülle bildende Zylinder in Längsrichtung ausgehend von einer Randebene (B7) ebenfalls mit Lippen (B8, B9) ausgebildet ist, die geeignet sind, sich der gegenüberliegenden Längsrandebene (B10) des Zylinders anzunähern, um die Dichtigkeit in der Längsebene zu gewährleisten.

10. Vorrichtung nach Anspruch 1, **dadurch gekennzeichnet**, das die Muffe (C) aus einem Material aus Polyurethan besteht, insbesondere aus demjenigen, das vom Antragsteller unter dem Markenzeichen COURBHANE vertrieben wird.

11. Vorrichtung nach Anspruch 2, **dadurch gekennzeichnet**, das die Muffe (C) die Oberfläche des Zylinders (B) nicht ganz überdeckt, sondern zwei seitliche Zonen freilässt, die den glatten Teilen (B2) ohne vorspringende Formen entsprechen, was den Zylinder eine gewisse Ausdehn- und Verformbarkeitsfreiheit verleiht, und dass die elastische Verformbarkeit der glatten Teile (B2) mögliche Gelenkzonen zum Öffnen oder Schließen der so beschriebenen Struktur je nach Situation und Einsetzen um die Rohre herum schafft.

12. Vorrichtung nach Anspruch 8, **dadurch gekennzeichnet, dass** die Muffe (C) deutlich länger ist als der Zylinder (B), wobei die Muffe an den Enden querverlaufende Flansche (C5, C6) aufweist, die zwischen sich einen Raum für die Positionierung der Greifeinrichtungen (D) der Vorrichtung für das Einsetzen der Struktur auf die Rohre beschreiben, und dass der innere Flansch (C5) ebenfalls als Gegenauflage für Einrichtungen (E) dient, die in Verbindung mit der Vorrichtung einen Druck auf die Lippen (B51, B61) des Zylinders (C) ausüben.

13. Vorrichtung nach Anspruch 2, **dadurch gekennzeichnet, dass** der Zylinder (B) mit Verstärkungseinrichtungen (H) des Typs Einlagen ausgebildet ist, wobei letztere in dem Zylinder aus Silikon versenkt sind und mit den Einlagen verbundene Verankerungsstifte (H1) herausragen und in die Materialdicke der Muffe aus Polyurethan eindringen können, um das Ganze zu versteifen.

14. Vorrichtung nach Einspruch 12 für das Einsetzen der Struktur um die Rohre (T1-T2) herum, **dadurch gekennzeichnet, dass** sie einen in der Länge der Struktur ausgebildeten Portalrahmen (P) umfasst, mit einer Greifeinrichtung (P1) zum Anheben und an jedem seiner Enden einem Mechanismus mit angelenkten, eine Zange bildenden Armen (G) mit Greifeinrichtungen (D), die zwischen die Flansche (C5, C6) der Muffe passen, und dass der Greifarmmechanismus (G) ein Schaltsystem (G1) einschließt, das im Betrieb an- oder ausgekuppelt werden kann, um die erfindungsgemäße Isolier- und Abdichtungsstruktur in einem einzigen Vorgang eng zu umschließen

15. Vorrichtung nach Anspruch 14, **dadurch gekennzeichnet, dass** die Einrichtungen (E) mit dem glatten Teil (B2) des Zylinders und auch mit den gelenkigen Armen des Mechanismus (G) verbunden sind, was aufgrund der dadurch bestehenden Flexibilität die Möglichkeit bietet, die Struktur zu "öffnen", damit sie um die Rohre herum geführt werden kann.
